(19) Europäisches Patentamt / European Patent Office / Office européen des brevets

(11) **EP 2 557 579 B1**

(12) **FASCICULE DE BREVET EUROPEEN**

(45) Date de publication et mention de la délivrance du brevet:
**15.04.2015 Bulletin 2015/16**

(51) Int Cl.:
*H01G 11/12* *(2013.01)*   *H01G 11/72* *(2013.01)*
*H01G 11/78* *(2013.01)*

(21) Numéro de dépôt: **12174304.1**

(22) Date de dépôt: **29.06.2012**

(54) **Cellule de supercondensateur et module supercapacitif incorporant une pluralité de ces cellules.**

Superkondensatorzelle und superkapazitives Modul, das mit mehreren solchen Zellen ausgestattet ist

Supercapacitor cell and supercapacitor module including a plurality of these cells.

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.07.2011 FR 1156397**

(43) Date de publication de la demande:
**13.02.2013 Bulletin 2013/07**

(73) Titulaire: **Hutchinson**
**75008 Paris (FR)**

(72) Inventeurs:
• **Voillequin, Baptiste**
**77210 Avon (FR)**
• **Dieudonné, Marie**
**12210 Laguiole (FR)**
• **Tavin, Gérard**
**49100 Angers (FR)**
• **Violon, Eric**
**45200 Amilly (FR)**

(74) Mandataire: **Bolinches, Michel Jean-Marie**
**Cabinet Orès**
**36, rue de St Pétersbourg**
**75008 Paris (FR)**

(56) Documents cités:
EP-A2- 1 331 677     JP-A- 2006 245 442
JP-A- 2007 294 407     JP-A- 2008 270 350
US-A1- 2003 134 190

**Description**

La présente invention concerne une cellule de supercondensateur comprenant des mono-cellules agencées en série et enserrées dans un emballage souple et étanche, ainsi qu'un module supercapacitif apte à former un supercondensateur et comportant dans un boîtier rigide au moins un empilement de plusieurs de ces cellules. L'invention s'applique notamment, mais pas exclusivement, à des supercondensateurs adaptés pour équiper des véhicules automobiles ou aéronautiques.

Les supercondensateurs sont des systèmes de stockage d'énergie électrique particulièrement intéressants pour les applications nécessitant de véhiculer de l'énergie électrique à forte puissance. Leur aptitude à des charges et décharges rapides, leur durée de vie accrue par rapport à une batterie à puissance élevée en font des candidats prometteurs pour nombre d'applications. Les supercondensateurs consistent généralement en l'association de deux électrodes poreuses conductrices à haute surface spécifique, immergées dans un électrolyte ionique et séparées par une membrane isolante appelé « séparateur », lequel permet la conductivité ionique et évite le contact électrique entre les électrodes. Chaque électrode est en contact avec un collecteur métallique permettant l'échange du courant électrique avec un système extérieur. Sous l'influence d'une différence de potentiel appliquée entre les deux électrodes, les ions présents au sein de l'électrolyte sont attirés par la surface d'électrode présentant une charge opposée, formant ainsi une double couche électrochimique à l'interface de chaque électrode. L'énergie électrique est ainsi stockée de manière électrostatique par séparation des charges. L'expression de la capacité C d'un supercondensateur est identique à celle d'un condensateur classique, soit :

$$C = \varepsilon.S/e, \text{ où } \varepsilon \text{ désigne la permittivité du milieu, } S \text{ la surface}$$

où $\varepsilon$ désigne la permittivité du milieu, S la surface occupée par la double couche, et e l'épaisseur de la double couche.

Les capacités atteignables au sein de supercondensateurs sont néanmoins beaucoup plus élevées que celles communément atteintes par des condensateurs classiques, du fait de l'utilisation de ces électrodes à surface spécifique maximisée usuellement carbonées et de l'extrême finesse de la double couche électrochimique (typiquement de quelques nanomètres d'épaisseur). Ces électrodes carbonées doivent nécessairement être conductrices afin d'assurer le transport des charges électriques, poreuses afin d'assurer le transport des charges ioniques et la formation de la double couche électrique sur une grande surface, et chimiquement inertes pour éviter toute réaction parasite consommatrice d'énergie.

Les paramètres principaux de dimensionnement des dispositifs supercapacitifs sont l'énergie de stockage totale, la puissance maximale délivrable et les densités massiques et volumiques des deux grandeurs précédentes (i. e. la densité d'énergie et la densité de puissance). On doit en général réaliser un compromis entre ces paramètres, en fonction des applications visées. Certaines applications comme les dispositifs statiques de stockage de masse requièrent avant tout une forte capacité de stockage sans que la puissance maximale ne soit un facteur vraiment limitant, alors que d'autres applications comme les dispositifs ferroviaires demandent une énergie et une puissance élevées sans que les contraintes de poids et de volume ne soient réellement limitantes, étant précisé que les applications aux véhicules automobiles ou aéronautiques demandent un compromis énergie/puissance avec des contraintes très fortes de poids et de volume.

L'énergie stockée E au sein d'un supercondensateur est définie selon l'expression classique des condensateurs, soit:

$$E = 1/2. \, C.V^2, \text{ où } V \text{ est le potentiel de la supercapacité.}$$

où V est le potentiel de la supercapacité.

La capacité et le potentiel sont deux paramètres essentiels qu'il est nécessaire d'optimiser pour favoriser les performances énergétiques, le potentiel dépendant principalement de la nature de l'électrolyte et notamment de sa stabilité électrochimique (étant précisé que les principales familles d'électrolytes sont les électrolytes organiques comprenant un sel organique dispersé dans un solvant organique et les électrolytes aqueux), et la capacité dépendant de la texture poreuse réellement accessible par cet électrolyte.

Une mono-cellule de supercondensateur (par « mono-cellule », on entend de manière connue dans la présente description une cellule élémentaire de taille minimale qui est nécessaire au fonctionnement autonome d'un supercondensateur et qui comprend par définition deux électrodes poreuses carbonées séparées par une membrane isolante et imprégnés d'un électrolyte) comporte usuellement deux collecteurs de courant permettant de véhiculer le courant jusqu'aux deux électrodes. Pour pouvoir atteindre un fonctionnement avec de fortes puissances, la résistance au passage du courant dans la mono-cellule doit être très faible, du fait que cette résistance engendre des pertes par effet Joule qui diminuent le rendement du supercondensateur. Cette résistance est la somme des résistances des différents composants de la mono-cellule, notamment la résistance de l'électrolyte et celle des collecteurs de courant. Pour limiter la contribution des résistances des collecteurs, il est nécessaire d'utiliser pour ces derniers des métaux de haute conductivité qui doivent en outre être peu chers et pouvoir être mis en forme facilement, tels que le cuivre et l'aluminium, notamment. Mais dans le cas d'un électrolyte aqueux, l'utilisation de ces métaux pose des problèmes de stabilité chimique et électrochimique du fait qu'ils se corrodent aux potentiels d'oxydation typiquement utilisés en milieu aqueux.

Une cellule de supercondensateur (par « cellule », on entend de manière connue dans la présente description une unité physique composée d'une ou plusieurs mono-cellules connectées entre elles) est non seulement composée d'au moins deux électrodes carbonées séparées par une membrane et de deux collecteurs, mais en outre d'un emballage étanche et imperméable aux gaz et aux liquides et de composants assurant la fermeture étanche et imperméable de l'emballage. Or, comme seule la matière active des électrodes contribue à la fonction de stockage d'énergie de la cellule, le poids et le volume de ses autres composants, dont l'emballage, doivent être minimisés sans pour autant limiter les performances de la cellule.

De manière générale, le dimensionnement d'un module supercapacitif est réalisé en termes de tension de fonctionnement et de capacité globale en fonction de l'application visée et de l'environnement d'utilisation du module par l'association en série ou en parallèle des cellules. L'association en série permet de sommer les tensions unitaires aux bornes des cellules, mais au détriment de la capacité globale dont l'inverse est égale à la somme des inverses des capacités unitaires. Contrairement à cela, l'association en parallèle de cellules permet de sommer les capacités des cellules mais sans modifier la tension aux bornes de chaque cellule.

On peut dans ce contexte citer le document US-B2-6 998 190 qui enseigne d'utiliser dans un supercondensateur un empilement de mono-cellules enveloppé dans deux films plastiques d'emballage à la jonction desquels sont collés ou fondus des collecteurs de courant.

Un but de la présente invention est de proposer une cellule de supercondensateur comprenant n mono-cellules (n ≥ 2) agencées côte à côte en série et enserrées dans un emballage souple et étanche qui permette de remédier à l'ensemble des inconvénients précités, cette cellule présentant notamment une structure évolutive qui permette de l'adapter au module supercapacitif l'incorporant et donc à l'application et à l'environnement d'utilisation visé tout en conservant les performances des supercondensateurs connus, ainsi qu'une taille n'étant ni trop grande (pour de petites architectures de modules) ni trop petite (pour de grandes architectures de modules, compte tenu de la tension nominale réduite d'une mono-cellule).

Une telle cellule selon l'invention a chaque mono-cellule comportant deux électrodes poreuses supérieure et inférieure, une membrane électriquement isolante séparant les électrodes l'une de l'autre et un électrolyte ionique dans lequel les électrodes sont immergées, la cellule comprenant à l'intérieur de l'emballage une pluralité de collecteurs de courant dont deux parties collectrices supérieure et inférieure recouvrent respectivement les électrodes supérieures et inférieures, et cette cellule est telle qu'au moins une paire des mono-cellules adjacentes est recouverte d'un dit collecteur supérieur ou inférieur commun à cette paire, deux collecteurs tronqués supérieur(s) et/ou inférieur(s) étant formés en deux extrémités respectives de la cellule, deux dits collecteurs adjacents se terminant respectivement par des tranches en regard qui sont électriquement isolées entre elles par un matériau adhésif isolant recouvrant ces tranches.

D'une manière générale, on notera que lesdites parties collectrices supérieure et inférieure définissent pour les n mono-cellules un nombre total desdits collecteurs (i.e. du ou des collecteur(s) commun(s) et des collecteurs tronqués) qui est égal à n+1.

Selon une autre caractéristique de l'invention, lesdites mono-cellules de ladite au moins une paire sont reliées entre elles par un tronçon de liaison qui comprend un premier tronçon continu de ladite partie collectrice supérieure ou inférieure et sont séparées entre elles par un second tronçon opposé discontinu de ladite partie collectrice inférieure ou supérieure, respectivement, ce premier tronçon étant défini par une portion médiane dudit collecteur commun et ce second tronçon étant défini par des portions desdits collecteurs adjacents qui présentent lesdites tranches et qui sont scellées sur cette portion médiane au moyen dudit matériau adhésif isolant.

Avantageusement, ledit emballage peut être scellé sur des faces externes respectives dudit premier tronçon continu et dudit second tronçon discontinu entre deux dites mono-cellules de ladite au moins une paire, au moyen dudit matériau adhésif isolant.

De préférence, on utilise un nombre n ≥ 3 de mono-cellules, avec au moins deux dites paires consécutives qui définissent au moins deux dits collecteurs communs respectivement supérieur et inférieur qui sont alternés en quinconce le long de la cellule sur lesdites deux parties collectrices, et au moins deux dits tronçons discontinus respectivement inférieur et supérieur également alternés sur ces parties.

Selon une autre caractéristique préférentielle de l'invention notamment pour l'application à un véhicule automobile, lesdites électrodes supérieures et inférieures sont chacune réalisées en un monolithe de carbone, et/ou ledit électrolyte est de type aqueux.

On notera que l'utilisation de carbone monolithique procure des capacités massiques élevées pour les mono-cellules avec des densités d'énergie améliorées par rapport à des électrodes non monolithiques obtenues par dispersion d'un carbone poreux conducteur dans un liant organique inerte et un solvant, puis par enduction de la pâte obtenue sur le collecteur de courant. En effet, un tel liant présente l'inconvénient d'épaissir et d'alourdir chaque mono-cellule sans être actif pour stocker de l'énergie. Pour atteindre des énergies de stockage importantes et des densités d'énergies élevées, il est donc particulièrement intéressant d'incorporer la matière active dans les mono-cellules sous forme de monolithes (i.e. sans liant inerte pour disperser la matière active, ce qui améliore *ipso facto* les densités massiques et volumiques d'énergie atteignables).

On notera également que les électrolytes aqueux, constitués par exemple de solutions aqueuses d'acide sulfurique, de chlorure de potassium, de sulfate de potassium ou d'autres sels en milieu acide, basique ou neutre, présentent l'avantage d'être peu chers et non inflammables contrairement aux électrolytes organiques qui sont chers, inflammables, toxiques et potentiellement polluants, posant ainsi des problèmes de sécurité pour une utilisation dans un véhicule automobile, par exemple. Ces électrolytes aqueux sont donc avantageusement utilisables dans un tel véhicule, bien que présentant l'inconvénient relatif d'un potentiel applicable plus faible (typiquement de 1,2 V) par rapport à celui qui est applicable avec un électrolyte organique (typiquement de 2,7 V).

Dans ce cas préférentiel notamment pour des véhicules automobiles où l'on utilise des électrodes carbonées monolithiques et un électrolyte aqueux, lesdits collecteurs peuvent avantageusement comporter chacun un conducteur métallique qui est revêtu d'une couche polymérique de protection vis-à-vis dudit électrolyte, sur sa face externe en contact avec ledit emballage et sur sa face interne tournée vers les collecteurs opposés respectivement inférieurs et supérieurs.

On notera que dans le cas préférentiel d'une matière active pour chaque électrode sous forme de monolithe de carbone, cette couche de protection recouvrant les deux faces de chaque collecteur procure avantageusement un bon contact entre ce monolithe et le conducteur métallique du collecteur tout en permettant de protéger ce conducteur sensible à la corrosion en milieu aqueux. Il en résulte que le contact électrique entre chaque électrode et le collecteur de courant la recouvrant est amélioré, ce qui permet de minimiser la résistance de l'interface entre cette matière active et le conducteur métallique adjacent.

Egalement à titre préférentiel, ledit emballage comprend un unique film déformable replié sur lui-même ou bien deux films déformables d'un matériau plastique multicouches métallisé ou non, deux faces respectivement supérieure et inférieure de cet unique film ou bien ces deux films étant scellés de préférence par thermoscellage entre lesdites mono-cellules deux à deux adjacentes et en des bords d'extrémités de la cellule de sorte à définir des volumes morts dans ces mono-cellules, cet emballage présentant de préférence une épaisseur comprise entre 50 $\mu$m et 200 $\mu$m.

On notera que cet emballage selon l'invention, bien que choisi peu dense et peu épais donc relativement léger, doit remplir ses fonctions d'étanchéité et d'imperméabilité.

Un module supercapacitif selon l'invention, qui est apte à former un supercondensateur, comporte :

- un boîtier rigide de préférence parallélépipédique et constitué de deux parties soudées ou collées l'une sur l'autre,
- au moins un empilement de m (m $\geq$ 2) cellules disposées sur une paroi de fond du boîtier, chaque cellule comprenant n mono-cellules (n $\geq$ 2) agencées côte à côte en série et enserrées dans un emballage souple et étanche, et
- des moyens de maintien en pression dudit au moins un empilement qui prennent appui sur une paroi sommitale du boîtier et sur une dite cellule proximale dudit au moins un empilement,

et ce module de l'invention est **caractérisé en ce que** chacune desdites cellules est telle que définie ci-dessus.

Avantageusement, ce module peut comporter un dit empilement de m $\geq$ 5 cellules, chacune des cellules comprenant n $\geq$ 5 mono-cellules.

Selon une autre caractéristique de l'invention, lesdits moyens de maintien en pression peuvent comporter au moins un moyen de rappel, tel qu'un ressort ou un coussin d'air, qui est monté contre ladite paroi sommitale et contre ladite cellule proximale dudit au moins un empilement et qui est optionnellement combiné à au moins une plaque disposée entre cette cellule proximale et ce moyen de rappel pour optimiser la répartition des efforts sur les surfaces respectives desdites électrodes.

Egalement avantageusement, la face externe dudit boîtier, de préférence au niveau de ladite paroi de fond, peut présenter des nervures et stries de renforcement mécanique du module qui forment optionnellement des guides et des logements recevant des boucles de cerclage.

Selon une autre caractéristique de l'invention, ce module peut comporter un dit empilement dont l'ensemble desdites cellules sont connectées électriquement entre elles par l'intermédiaire de deux blocs collecteurs terminaux qui sont respectivement connectés à deux cosses métalliques correspondant aux deux bornes du module, chaque cosse présentant une extrémité de cosse interne audit boîtier assemblée audit bloc collecteur adjacent par soudure, brasure ou contact mécanique et une extrémité libre de cosse externe à ce boîtier destinée à recevoir une connectique de raccordement.

Avantageusement, seules lesdites cosses font saillie hors dudit boîtier, ces cosses étant assemblées auxdits blocs collecteurs à des hauteurs identiques ou non de ladite paroi de fond, avec lesdites extrémités libres de ces cosses qui saillent de préférence hors du boîtier respectivement de manière adjacente à ladite paroi de fond et de manière adjacente à ladite paroi sommitale.

D'autres caractéristiques, avantages et détails de la présente invention ressortiront à la lecture de la description suivante d'un exemple de réalisation de l'invention, donné à titre illustratif et non limitatif, ladite description étant réalisée en référence avec le dessin joint, dans lequel :

la figure 1 est une vue schématique partielle en perspective et en coupe transversale d'une cellule de supercondensateur à plusieurs mono-cellules selon un exemple de réalisation de l'invention,
la figure 2 est une vue de détail également en perspective et en coupe transversale correspondant à la zone encadrée de la figure 1 et montrant la structure de chaque tronçon de liaison entre mono-cellules adjacentes de cette cellule,
la figure 3 est une vue de détail en médaillon d'un collecteur de courant de la figure 2 montrant en coupe transversale la structure de ce collecteur, et
la figure 4 est une vue schématique en coupe transversale d'un module de supercondensateur selon un exemple de l'invention, incorporant un empilement de cellules par exemple telles que celle de la figure 1.

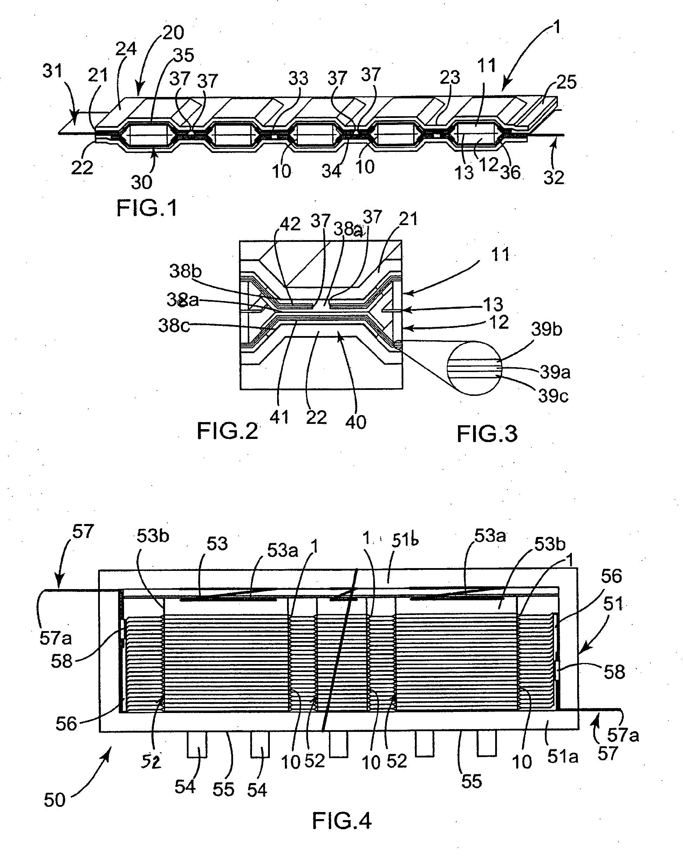

La cellule 1 de la figure 1 comprend dans cet exemple n = 5 mono-cellules 10 agencées côte à côte en série et enveloppées dans un emballage 20 constitué de deux films plastiques supérieur 21 et inférieur 22 souples, déformables et étanches (en variante, cet emballage pourrait être formé d'un unique film souple, déformable et étanche replié sur lui-même). Chaque mono-cellule 10 comporte deux électrodes poreuses supérieure 11 et inférieure 12 qui sont réalisées chacune en un monolithe de carbone, sont séparées par une membrane 13 électriquement isolante et qui baignent dans un électrolyte ionique aqueux (non visible).

La cellule 1 comprend, à l'intérieur de l'emballage 20, une unité collectrice de courant 30 dont deux parties collectrices supérieure 31 et inférieure 32 recouvrent respectivement les électrodes supérieures 11 et inférieures 12.

Selon l'invention, chaque paire de mono-cellules 10 adjacentes est recouverte, d'une part, d'un collecteur supérieur 33 ou inférieur 34 commun à cette paire et, d'autre part, de deux portions de ce collecteur commun 33, 34 respectivement inférieures ou supérieures, étant précisé que la cellule 1 présente en bouts de ligne deux collecteurs tronqués 35 et 36. Par « collecteur tronqué », on entend dans la présente description un collecteur commun 33, 34 qui est tronqué en chaque extrémité de raccordement électrique de la cellule 1, en ce sens qu'il ne présente qu'une demi-portion environ de ce collecteur commun 33, 34. En d'autres termes, chaque collecteur commun 33, 34 est partagé entre deux mono-cellules adjacentes 10, et deux collecteurs communs consécutifs 33 et 34 sont disposés de part et d'autre du plan longitudinal médian de la cellule 1 contenant les membranes 13, ce qui fait que ces collecteurs communs 33, 34 sont disposés en quinconce par rapport à ce plan entre les parties collectrices supérieure 31 et inférieure 32.

De plus et comme visible à la figure 1, deux collecteurs adjacents 33, 34, 35, 36 se terminent respectivement par des tranches en regard 37 qui sont électriquement isolées entre elles par un film adhésif isolant 38a recouvrant ces tranches 37, ce qui protège non seulement ces tranches 37 de la corrosion mais permet en outre d'éviter que ces connecteurs adjacents 33 à 36 ne se touchent en formant des courts-circuits, comme cela sera expliqué ci-dessous.

Cette cellule 1 comporte dans l'exemple de la figure 1 deux collecteurs communs supérieurs 33, deux collecteurs communs inférieurs 34, un collecteur tronqué supérieur 35 et un collecteur tronqué inférieur 36, soit au total six collecteurs 33 à 36.

Plus précisément et comme visible à la figure 2, les mono-cellules 10 de chaque paire sont reliées entre elles par un tronçon de liaison 40 qui comprend un premier tronçon continu 41 de la partie collectrice 31 ou 32 défini par une portion médiane d'un collecteur commun 33, 34, et elles sont séparées entre elles par un second tronçon opposé discontinu 42 de l'autre partie collectrice 32 ou 31 défini par des portions des collecteurs adjacents 33 à 36 qui présentent les tranches 37 et qui sont scellées sur cette portion médiane 41 au moyen du film adhésif isolant 38a.

On voit dans le médaillon de la figure 3 que chaque collecteur 33 à 36 comporte un conducteur métallique 39a revêtu avantageusement sur ses deux faces de fines couches de protection supérieures 39b et inférieures 39c et, à la vue de détail de la figure 2, que deux autres films adhésifs isolants 38b et 38c (par exemple à base du même matériau que le film 38a solidarisant chaque tronçon continu 41 au tronçon discontinu 42 lui faisant face) assurent une interface adhésive, d'une part, entre chaque tronçon discontinu 42 de la partie collectrice supérieure 31 et le film d'emballage supérieur 21 (film 38b) et, d'autre part, entre chaque tronçon continu 41 de la partie collectrice inférieure 32 et le film d'emballage inférieur 22 (film 38c).

On notera que ce matériau adhésif et isolant électrique permet notamment d'aider à la soudure entre deux mono-cellules 10 adjacentes, en emprisonnant de manière étanche les tronçons de liaison 40 entre mono-cellules 10, du fait que ce matériau est déposé aux interfaces entre chaque couche de protection supérieure 39b et inférieure 39c des collecteurs 33 à 36 et les films d'emballage 21 et 22 correspondants.

On notera également que ce matériau adhésif isolant permet de protéger les tranches dénudées 37 (non revêtues des couches de protection 39b et 39c) du conducteur métallique de chaque collecteur 33 à 36 par fluage de ce matériau qui vient combler la zone laissée libre entre ces tranches 37 (cette zone inter-tranches 37 est montrée dépourvue de matériau isolant à la figure 2 pour des raisons de clarté, avant le fluage de ce dernier), ce qui permet d'envisager une préparation par enduction ou trempage en ligne de l'unité collectrice 30 en rouleau suivie d'une découpe des collecteurs 33 à 36. Et bien que cette découpe mette à nu les tranches 37, ces dernières sont protégées par dépôt du film 38a qui assure ainsi l'isolation entre deux collecteurs adjacents 33 à 36 en évitant tout court-circuit dû à un contact entre ceux-ci.

On dépose donc ce matériau adhésif isolant sous forme de films 38a, 38b, 38c revêtant les collecteurs 33 à 36 et ayant une géométrie en forme de fines languettes rectangulaires collées à plat sur les tronçons de liaison 40 de ces collecteurs 33 à 36 (en débordant légèrement de part et d'autre de ces tronçons 40). On notera que la forme d'haltère visible à la figure 2 pour chaque film adhésif central 38a déposé entre et au contact des faces internes respectives de chaque tronçon continu 41 et discontinu 42 n'est obtenue qu'après les opérations de coupe et d'assemblage de la cellule 1, par la déformation que chaque film 38a subit au moment de la mise en forme de la cellule 1 due aux épaisseurs d'électrodes 11 et 12 et par le contact réalisé entre chaque film supérieur 38b et inférieur 38c.

Pour assurer l'étanchéité entre les mono-cellules 10 connectées en série, on procède à un scellage de l'emballage 20 e.g. par thermoscellage, étant précisé qu'il peut être en variante scellé à froid ou collé dans chaque intervalle 23 correspondant aux tronçons de liaison entre mono-cellules 10 et sur les deux bords longitudinaux 24 et 25 de l'emballage 20.

A titre de matériau utilisable pour cet emballage 20, on peut citer un ou des films plastiques multicouches 21 et 22 aluminisés ou non à haute imperméabilité faisant la totalité de la longueur nécessaire pour emballer les n mono-cellules 10 connectées côte à côte en série. De préférence, on utilise un film tricouches PE/PA/PE (polyéthylène/ polyamide/ polyéthylène) d'épaisseur pouvant être comprise entre 50 $\mu$m et 200 $\mu$m.

La géométrie choisie pour le ou les films d'emballage 21 et 22 est telle qu'elle doit présenter une largeur suffisante pour inclure un volume mort dans chacune des n-mono-cellules 10, afin de ménager un espace nécessaire au dégazage des mono-cellules 10 lors des premiers cyclages. Ensuite, les mono-cellules 10 sont redécoupées sous vide pour laisser échapper le surplus de gaz et ressoudées au plus près des électrodes 11 et 12. Ce volume mort permet également au départ de former une réserve temporaire d'électrolyte, pendant la durée des cyclages nécessaire au remplissage des électrodes 11 et 12 par cet électrolyte.

Un exemple de cellule 1 selon l'invention fabriquée et assemblée par la Demanderesse a utilisé :

- des électrodes monolithiques 11 et 12 de carbone de dimensions 50 x 25 mm$^2$ et d'épaisseur 0,3 mm ;
- un séparateur formé d'une membrane cellulosique SEPARION® de 30 $\mu$m d'épaisseur et de dimensions 60 x 35 mm ;
- un électrolyte constitué d'acide sulfurique Fischer à 1 mol/L ;
- des collecteurs 33 à 36 à base d'un conducteur 39a en cuivre de 12,5 $\mu$m d'épaisseur et de dimensions 76 x 54 mm ;
- des films adhésifs 38a, 38b, 38c constitués de bicouches PA/PE d'épaisseur 50 $\mu$m et de dimensions 15 x 104 mm ;
- des films d'emballage 21, 22 formés de tricouches PE/PA/PE d'épaisseur 120 $\mu$m et dimensions 260 x 104 mm ; et
- des couches de protection 39b et 39c polymériques de 20 $\mu$m d'épaisseur à sec.

Il convient de noter que cette architecture de cellule 1 selon l'invention permet notamment :

- d'adapter le nombre de mono-cellules 10 mises côte à côte et donc d'adapter la tension nominale de fonctionnement de la cellule 1 à la tension nominale attendue pour l'application visée ;
- de conserver une géométrie identique pour tous les composants quelle que soit la taille de la cellule 1, hormis pour le ou les films d'emballage 21 et 22 dont la longueur est à adapter au nombre de mono-cellules 10 ;
- d'utiliser une tension nominale de la cellule 1 suffisamment élevée pour correspondre aux tensions usuelles utilisées dans les systèmes électroniques et électriques basse tension ;
- de se passer de préformage des empreintes du ou de chaque film d'emballage 21, 22, ce qui permet non seulement d'éviter une étape de pré-fatigue mécanique du ou de chaque film 21, 22 mais en outre de profiter pleinement de la souplesse de ce dernier car le préformage imposerait une forme et une dimension au positionnement de l'électrode 11, 12, ce que l'on cherche à éviter dans la présente invention ; et
- de profiter de ce matériau adhésif isolant 38a, 38b, 38c pour protéger les tranches 37 des collecteurs 33 à 36, ce qui permet une préparation identique selon la taille de la cellule 1 et une préparation de la bobine d'unité collectrice 30 en continu, avec découpe des collecteurs 33 à 36 postérieure à l'application des couches de protection 39b et 39c mais avec la protection des tranches 37 par ce matériau adhésif isolant.

La figure 4 montre de façon schématique et partielle un module de supercondensateur 50 selon l'invention, qui comporte :

- un boîtier rigide parallélépipédique 51 en matériau plastique thermodurcissable formé de deux parties par exemple symétriques l'une de l'autre qui sont soudées ou collées l'une sur l'autre (la géométrie de contact entre ces deux parties étant horizontale à mi-hauteur ou bien suivant une diagonale du parallélépipède),

- un empilement 52 de plusieurs cellules 1 montées les unes sur les autres qui est disposé sur une paroi de fond 51a du boîtier 51, chaque cellule 1 comprenant par exemple cinq mono-cellules 10 agencées côte à côte en série et enserrées dans un emballage 20 souple et étanche à l'instar de ce qui vient d'être décrit en référence à la figure 1 (le boîtier 51 est montré coupé dans le sens de sa longueur ce qui explique que seules trois mono-cellules 10 sont visibles pour chaque cellule 1 de la figure 4), et
- des moyens de maintien en pression 53 de l'empilement 52 qui prennent appui sur une paroi sommitale 51 b du boîtier 51 et sur la dernière cellule supérieure 1 de l'empilement 52, ces moyens 53 étant par exemple constitués de ressorts 53a surmontant respectivement les mono-cellules 10 supérieures de cet empilement 52 et montés contre cette paroi sommitale 51 b et contre des plaques 53b appliquées sur ces mono-cellules 10 pour une meilleure répartition des efforts sur les surfaces des électrodes 11 et 12.

Ces plaques 53b sont avantageusement formées d'une structure peu dense et à haute performance mécanique, telle qu'une structure composite en nid-d'abeilles ou une mousse thermodurcissable.

En variante, ces moyens de maintien en pression peuvent comporter des coussins d'air qui sont montés en appui entre cette paroi sommitale 51 b et l'empilement 52 et qui sont gonflés une fois positionnés dans le boîtier 51 ou bien avant ce positionnement.

De plus et comme illustré à la figure 4, le boîtier 51 présente avantageusement sur la face externe de sa paroi de fond 51 a des nervures 54 et stries 55 de renforcement mécanique du module 1 pouvant former des guides-logements recevant des boucles de cerclage (non représentées).

Pour réaliser la connexion entre toutes les cellules 1 de l'empilement 52, on procède à une fixation par soudage, brasage ou par contact mécanique (e.g. par des rivets) de deux collecteurs terminaux 56 de ces cellules 1 respectivement à deux cosses métalliques 57 (e.g. en laiton, cuivre, aluminium ou acier) correspondant aux bornes du module 1. Chaque collecteur terminal 56 et la cosse 57 adjacente sont ainsi connectés en une zone de connexion 58, étant précisé que chaque cosse 57 présente une extrémité interne au boîtier 51 et une extrémité 57a externe à ce boîtier 51 qui a pour fonction de servir de connectique pour le module 50.

Cette fixation entre collecteur terminal 56 et cosse 57 peut être réalisée à mi-hauteur de l'empilement 52 pour les deux cosses 57 ou bien, dans la variante illustrée à la figure 4, en prévoyant ces cosses 57 respectivement en haut et en bas de cet empilement 52. Vu de l'extérieur du boîtier 51, les deux cosses 57 selon cette variante sortent donc du boîtier 51 à proximité de parois opposées du parallélépipède (i.e. les parois de fond 51 a et sommitale 51 b).

Un exemple de boîtier 50 selon l'invention fabriqué et assemblé par la Demanderesse a utilisé :

- deux parties identiques formant le boîtier 51 en polyamide chargé de fibres de verre, d'épaisseur de paroi 4 mm et assemblées par collage avec des dimensions extérieures de 70 mm pour la largeur, 185 mm pour la longueur et 95 mm pour la hauteur ;
- dix ressorts 53a exerçant la force nécessaire à l'obtention de 2 bars de pression de contact sur les cellules 1, l'effort de ces ressorts 53a étant réparti sur l'empilement 52 de mono-cellules 10 à l'aide de cinq plaques 53b reliées entre elles de façon souple ; et
- deux cosses 57 constituées de plaques de cuivre de 0,5 mm d'épaisseur, de 50 mm de largeur et dépassant de 20 mm, qui sont respectivement soudées aux deux collecteurs terminaux 56.

On notera qu'un module 50 de l'invention permet notamment :

- d'être aisément adaptable, seule la hauteur du boîtier 51 étant à adapter en fonction du nombre de cellules 1 associées ;
- de profiter de l'emballage souple 20 permettant de transmettre les efforts de pression sur l'ensemble des cellules 1 empilées à l'échelle du module 50 et donc de rendre possible l'empilement 52 (lequel ne serait pas envisageable sans cet emballage 20 en plaçant les électrodes 11 et 12 directement les unes sur les autres) ;
- d'obtenir un empilement 52 satisfaisant avec un maintien de la pression appliquée grâce à ces emballages souples 20 et à la mise en pression unitaire par les moyens de maintien en pression 53 susmentionnés ;
- d'obtenir une bonne connectivité avec une cosse unique 57 pour chaque borne du module 50 ; et
- d'obtenir une bonne résistance mécanique de l'ensemble du module 50 car seules les deux cosses 57 font saillie hors du boîtier 51.

**Revendications**

1. Cellule (1) de supercondensateur comprenant n mono-cellules (10) ($n \geq 2$) agencées côte à côte en série et enserrées dans un emballage (20) souple et étanche, chaque mono-cellule comportant deux électrodes poreuses supérieure (11) et inférieure (12), une membrane (13) électriquement isolante séparant ces électrodes l'une de l'autre et un électrolyte ionique dans lequel ces électrodes sont immergées, la cellule comprenant à l'intérieur de l'emballage une pluralité de collecteurs de courant (33, 34, 35, 36) dont deux parties collectrices supérieure (31) et inférieure (32) recouvrent respectivement les électrodes supérieures et inférieures, **caractérisée en ce qu'**au moins une paire desdites mono-cellules adjacentes est recouverte d'un dit collecteur supérieur ou inférieur commun (33, 34) à cette paire, deux collecteurs tronqués supérieur(s) (35) et/ou inférieur(s) (36) étant formés en deux extrémités respectives de la cellule, deux dits collecteurs (33, 34, 35, 36) adjacents se terminant respectivement par des tranches (37) en regard qui sont électriquement isolées entre elles par un matériau adhésif isolant (38a, 38b) recouvrant ces tranches.

2. Cellule (1) selon la revendication 1, **caractérisée en ce que** lesdites mono-cellules (10) de ladite au moins une paire sont reliées entre elles par un tronçon de liaison (40) qui comprend un premier tronçon continu (41) de ladite partie collectrice supérieure (31) ou inférieure (32) et sont séparées entre elles par un second tronçon opposé discontinu (42) de ladite partie collectrice inférieure ou supérieure, respectivement, ce premier tronçon étant défini par une portion médiane (41) dudit collecteur commun (33, 34) et ce second tronçon étant défini par des portions desdits collecteurs (33, 34, 35, 36) adjacents qui présentent lesdites tranches (37) et qui sont scellées sur cette portion médiane au moyen dudit matériau adhésif isolant (38a, 38b).

3. Cellule (1) selon la revendication 2, **caractérisée en ce que** ledit emballage (20) est scellé sur des faces externes respectives dudit premier tronçon continu (41) et dudit second tronçon discontinu (42) entre deux dites mono-cellules (10) de ladite au moins une paire, au moyen dudit matériau adhésif isolant (38b, 38c).

4. Cellule (1) selon la revendication 2 ou 3, **caractérisée en ce que** n ≥ 3, avec au moins deux dites paires consécutives qui définissent au moins deux dits collecteurs communs respectivement supérieur (33) et inférieur (34) qui sont alternés en quinconce le long de la cellule sur lesdites deux parties collectrices (31 et 32), et au moins deux dits tronçons discontinus (42) respectivement inférieur et supérieur également alternés sur ces parties.

5. Cellule (1) selon une des revendications précédentes, **caractérisée en ce que** lesdites parties collectrices supérieure (31) et inférieure (32) définissent pour lesdites n mono-cellules (10) un nombre total desdits collecteurs (33, 34, 35, 36) égal à n+1.

6. Cellule (1) selon une des revendications précédentes, **caractérisée en ce que** lesdites électrodes supérieures (11) et inférieures (12) sont chacune réalisées en un monolithe de carbone, et/ou **en ce que** ledit électrolyte est de type aqueux.

7. Cellule (1) selon la revendication 6, **caractérisée en ce que** lesdits collecteurs (33, 34, 35, 36) comportent chacun un conducteur métallique (39a) qui est revêtu d'une couche polymérique de protection (39b, 39c) vis-à-vis dudit électrolyte, sur sa face externe en contact avec ledit emballage (20) et sur sa face interne tournée vers les collecteurs opposés respectivement inférieurs et supérieurs.

8. Cellule (1) selon une des revendications précédentes, **caractérisée en ce que** ledit emballage (20) comprend un unique film déformable replié sur lui-même ou bien deux films déformables (21 et 22) d'un matériau plastique multicouches métallisé ou non, deux faces respectivement supérieure et inférieure de cet unique film ou bien ces deux films étant scellés de préférence par thermoscellage entre lesdites mono-cellules (10) deux à deux adjacentes et en des bords d'extrémités (24 et 25) de la cellule de sorte à définir des volumes morts dans ces mono-cellules, cet emballage présentant de préférence une épaisseur comprise entre 50 μm et 200 μm.

9. Module supercapacitif (50) apte à former un supercondensateur, le module comportant :

    - un boîtier rigide (51) de préférence parallélépipédique et constitué de deux parties soudées ou collées l'une sur l'autre,
    - au moins un empilement (52) de m (m ≥ 2) cellules (1) disposées sur une paroi de fond (51 a) du boîtier, chaque cellule comprenant n mono-cellules (10) (n ≥ 2) agencées côte à côte en série et enserrées dans un emballage (20) souple et étanche, et
    - des moyens de maintien en pression (53) dudit au moins un empilement qui prennent appui sur une paroi sommitale (51 b) du boîtier et sur une dite cellule proximale (1) dudit au moins un empilement,

    **caractérisé en ce que** chacune desdites cellules est telle que définie à l'une des revendications précédentes.

**10.** Module (50) selon la revendication 9, **caractérisé en ce qu'**il comporte un dit empilement (52) de m ≥ 5 cellules (1), chacune des cellules comprenant n ≥ 5 mono-cellules (10).

**11.** Module (50) selon la revendication 9 ou 10, **caractérisé en ce que** lesdits moyens de maintien en pression (53) comportent au moins un moyen de rappel (53a), tel qu'un ressort ou un coussin d'air, qui est monté contre ladite paroi sommitale (51b) et contre ladite cellule proximale (1) dudit au moins un empilement (52) et qui est optionnellement combiné à au moins une plaque (53b) disposée entre cette cellule proximale et ce moyen de rappel pour optimiser la répartition des efforts sur les surfaces respectives desdites électrodes (11 et 12).

**12.** Module (50) selon une des revendications 9 à 11, **caractérisé en ce que** la face externe dudit boîtier (51), de préférence au niveau de ladite paroi de fond (51a), présente des nervures (54) et stries (55) de renforcement mécanique du module qui forment optionnellement des guides et des logements recevant des boucles de cerclage.

**13.** Module (50) selon une des revendications 9 à 12, **caractérisé en ce qu'**il comporte un dit empilement (52) dont l'ensemble desdites cellules (1) sont connectées électriquement entre elles par l'intermédiaire de deux blocs collecteurs terminaux (56) qui sont respectivement connectés à deux cosses métalliques (57) correspondant aux deux bornes du module, chaque cosse présentant une extrémité de cosse interne audit boîtier (51) assemblée audit bloc collecteur adjacent par soudure (58), brasure ou contact mécanique et une extrémité libre (57a) de cosse externe à ce boîtier destinée à recevoir une connectique de raccordement.

**14.** Module (50) selon la revendication 13, **caractérisé en ce que** seules lesdites cosses (57) font saillie hors dudit boîtier (51), ces cosses étant assemblées auxdits blocs collecteurs (56) à des hauteurs identiques ou non de ladite paroi de fond (51a), avec lesdites extrémités libres (57a) de ces cosses qui saillent hors du boîtier de préférence respectivement de manière adjacente à ladite paroi de fond et de manière adjacente à ladite paroi sommitale (51 b).

**Patentansprüche**

**1.** Superkondensatorzelle (1), umfassend n Monozellen (10) (n ≥ 2), welche nebeneinander in Reihe angeordnet sind und in einer flexiblen und dichten Verpackung eingeschlossen sind, wobei jede Monozelle zwei, eine obere (11) und eine untere (12), poröse Elektroden, eine elektrisch isolierende Membran (13), welche diese Elektroden voreinander separiert, und ein ionisches Elektrolyt, in welchem diese Elektroden eingetaucht sind, umfasst, wobei die Zelle im Inneren der Verpackung eine Vielzahl von Stromkollektoren (33, 34, 35, 36) umfasst, von welchen zwei, ein oberer (31) und ein unterer (32), Kollektorabschnitte die oberen bzw. unteren Elektroden bedecken, **dadurch gekennzeichnet, dass** wenigstens ein Paar der beachbarten Monozellen von einem genannten oberen und unteren genannten Kollektor (33, 34), welcher für dieses Paar gemeinsam ist, bedeckt ist, wobei zwei oberen (35) und/oder untere (36) gestutzte Kollektoren an zwei entsprechenden Enden der Zelle ausgebildet sind, wobei die zwei genannten benachbarten Kollektoren (33, 34, 35, 36) jeweils an gegenüberliegenden Rändern (37) enden, welche voreinander durch einen isolierenden Klebstoff (38a, 38b), welcher diese Abschnitte bedeckt, elektrisch isoliert sind.

**2.** Zelle (1) nach Anspruch 1, **dadurch gekennzeichnet, dass** die Monozellen (10) des wenigstens einen Paares miteinander verbunden sind durch ein Verbindungsstück (40), welches ein erstes durchgängiges Stück (41) des oberen (31) oder unteren (32) Kollektorabschnitts umfasst, und voneinander separiert sind durch ein nicht-kontinuierliches gegenüberliegendes zweites Stück (42) des unteren bzw. oberen Kollektorabschnitts, wobei dieses erste Stück definiert ist durch einen Mittelabschnitt (41) des gemeinsamen Kollektors (33, 34) und dieses zweite Stück definiert ist durch Abschnitte der benachbarten Kollektoren (33, 34, 35, 36), welche die Ränder (37) aufweisen und mittels des isolierenden Klebstoffes (38a, 38b) auf diesem Mittelabschnitt versiegelt sind.

**3.** Zelle (1) nach Anspruch 2, **dadurch gekennzeichnet, dass** die Verpackung (20) auf den jeweiligen äußeren Flächen des ersten kontinuierlichen Stücks (41) und des nichtkontinuierlichen zweiten Stücks (42) zwischen zwei genannten Monozellen (10) des wenigstens einen Paares mittels des isolierenden Klebstoffes (38b, 38c) versiegelt ist.

**4.** Zelle (1) nach Anspruch 2 oder 3, **dadurch gekennzeichnet, dass** n ≥ 3, mit wenigstens zwei genannten auseinander folgenden Paaren, welche wenigstens zwei genannte gemeinsame obere (33) bzw. untere (34) Kollektoren definieren, welche versetzt entlang der Zelle abwechselnd auf den zwei Kollektorabschnitten (31 und 32) angeordnet sind, und wenigstens zwei genannten unteren bzw. oberen nicht-kontinuierlichen Stücken (42), welche ebenfalls abwechselnd auf diesen Abschnitte angeordnet sind.

**5.** Zelle (1) nach einem der vorhergehenden Ansprüche, **dadurch gekennzeichnet, dass** die oberen (31) und unteren (32) Kollektorabschnitte für die n Monozellen (10) eine Gesamtzahl der Kollektoren (33, 34, 35, 36) von n+1 definieren.

**6.** Zelle (1) nach einem der vorhergehenden Ansprüche, **dadurch gekennzeichnet, dass** die oberen (11) und unteren (12) Elektroden jeweils realisiert sind aus einem Kohlenstoffmonolith und/oder dass das Elektrolyt vom wässrigen Typ ist.

**7.** Zelle (1) nach Anspruch 6, **dadurch gekennzeichnet, dass** die Kollektoren (33, 34, 35, 36) jeweils einen metallischen Leiter (39a) umfassen, welcher mit einer polymeren Schicht (39b, 39c) zum Schutz gegenüber dem Elektrolyt auf seiner äußeren Fläche im Kontakt mit der Verpackung (20) und auf seiner inneren Fläche, welche den gegenüberliegenden unteren bzw. oberen Kollektoren zugewandt ist, bedeckt ist.

**8.** Zelle (1) nach einem der vorhergehenden Ansprüche, **dadurch gekennzeichnet, dass** die Verpackung (20) eine einzige auf sich selbst gefaltete verformbare Folie oder aber zwei verformbare Folien (21 und 22) aus einem metallisierten oder nicht metallisierten Mehrschichtkunststoffmaterial umfasst, wobei zwei Seiten, eine obere bzw. untere, dieser einzigen Folge oder aber dieser zwei Folien bevorzugt durch Thermoversiegelung zwischen den paarweise benachbarten Monozellen (10) und an zwei Endrändern (24 und 25) der Zelle auf solche Weise versiegelt sind, dass Totvolumina in diesen Monozellen definiert werden, wobei diese Verpackung bevorzugt eine Dicke aufweist, welche zwischen 50 $\mu$m und 200 $\mu$m enthalten ist.

**9.** Superkapazitives Modul (50), welches dazu ausgestaltet ist, einen Superkondensator zu bilden, wobei das Modul umfasst:

   - ein starres Gehäuse (51), welches bevorzugt parallelepipedförmig und aus zwei aneinander geschweißten oder geklebten Teilen gebildet ist,
   - einen Stapel (52) von m (m ≥ 2) Zellen (1), welche auf einer Bodenwand (51a) des Gehäuses angeordnet sind, wobei jede Zelle n Monozellen (10) (n ≥ 2) umfasst, welche nebeneinander in Reihe angeordnet und in einer flexiblen und dichten Verpackung (20) eingeschlossen sind, und
   - Mittel zum Halten unter Druck (53) des wenigstens einen Stapels, welche an einer Dachwand (51b) des Gehäuses und einer nächsten genannten Zelle (1) des wenigstens einen Stapels gelagert sind,

   **dadurch gekennzeichnet, dass** jede der Zellen so wie in einem der vorhergehenden Ansprüche definiert ist.

**10.** Modul (50) nach Anspruch 9, **dadurch gekennzeichnet, dass** es einen genannten Stapel (52) von m ≥ 5 Zellen (1) umfasst, wobei jede der Zellen n ≥ 5 Monozellen (10) umfasst.

**11.** Modul (50) nach Anspruch 9 oder 10, **dadurch gekennzeichnet dass** die Mittel zum Halten unter Druck (53) wenigstens ein Rückstellmittel (53a), wie zum Beispiel eine Feder oder ein Luftkissen, umfassen, welches an der Dachwand (51) und an der nächste Zelle (1) des wenigstens einen Stapels (52) angebracht ist, und welches optional mit wenigstens einer Platte (53b) kombiniert ist, welche zwischen der nächsten Zelle und diesem Rückstellmittel angeordnet ist, um die Verteilung von Kräften auf den jeweiligen Oberflächen der Elektroden (11 und 12) zum optimierten.

**12.** Modul (50) nach einem der Ansprüche 9 bis 11, **dadurch gekennzeichnet, dass** die äußere Seite des Gehäuses (51), bevorzugt auf Höhe der Bodenwand (51a), Rippen (54) und Riefen (55) zur mechanischen Verstärkung des Moduls aufweist, welche optional Einfassringe aufnehmende Führungen.

**13.** Module (50) nach einem der Ansprüche 9 bis 12, **dadurch gekennzeichnet, dass** es einen genannten Stapel (52) umfasst, dessen Anordnung von Zellen (1) untereinander elektrisch über zwei Kollektoranschlussblöcke (56) verbunden sind, welche jeweils mit zwei metallischen Hülsen (57) verbunden sind, die den zwei Anschlüssen des Moduls entsprechen, wobei jede Hülse ein inneres Anschlussende an dem Gehäuse (51), welches mit dem benachbarten Kollektorblock durch Schweißen (58), Löten oder mechanischen Kontakt zusammengefügt ist, und ein freies Anschlussende (57a), welches extern bezüglich dieses Gehäuses ist und dazu bestimmt ist, eine Anschlussverbindungstechnik auszunehmen, aufweist.

**14.** Modul (50) nach Anspruch 13, dadurch gekennzeichet, dass lediglich die Hülsen (57) über das Gehause (51) vorstehen, wobei diese Hülsen mit den Kollektorblöcken (56) auf Höhen zusammengefügt sind, welche identisch zu der Bodenwand (51a) sind oder nicht, wobei die freien Enden (57a) dieser Hülsen bevorzugt jeweils auf zu der Bodenwand benachbarte Weise bzw. auf zu der Dachwand (51b) benachbarte Weise über das Gehäuse vorstehen.

**Claims**

1.  Cell (1) of a supercapacitor comprising n unit cells (10) (n ≥ 2) arranged side by side in series and encapsulated in a flexible and leak-tight packaging (20), each unit cell comprising two upper (11) and lower (12) porous electrodes, an electrically insulating membrane (13) separating these electrodes from one another and an ionic electrolyte in which these electrodes are immersed, the cell comprising, inside the packaging, a plurality of current collectors (33, 34, 35, 36) whose two upper (31) and lower (32) collector parts respectively cover the upper and lower electrodes, **characterized in that** at least one pair of said adjacent unit cells is covered with one said upper or lower collector (33, 34) common to this pair, two upper (35) and/or lower (36) truncated collectors being formed at two respective ends of the cell, two of said collectors (33, 34, 35, 36) that are adjacent being respectively terminated by facing edge sections (37) which are electrically insulated from one another by an insulating adhesive material (38a, 38b) covering these edge sections.

2.  Cell (1) according to Claim 1, **characterized in that** said unit cells (10) of said at least one pair are connected together by a link section (40) which comprises a first continuous section (41) of said upper (31) or lower (32) collector part and are separated from one another by a second opposing discontinuous section (42) of said lower or upper collector part, respectively, this first section being defined by a median portion (41) of said common collector (33, 34) and this second section being defined by portions of said adjacent collectors (33, 34, 35, 36) which have said edge sections (37) and which are sealed over this median portion by means of said insulating adhesive material (38a, 38b).

3.  Cell (1) according to Claim 2, **characterized in that** said packaging (20) is sealed over respective external faces of said first continuous section (41) and of said second discontinuous section (42) between two said unit cells (10) of said at least one pair, by means of said insulating adhesive material (38b, 38c).

4.  Cell (1) according to Claim 2 or 3, **characterized in that** n ≥ 3, with at least two said consecutive pairs which define at least two said common collectors, upper (33) and lower (34) respectively, which are alternated in staggered fashion along the cell over said two collector parts (31 and 32), and at least two said discontinuous sections (42) upper and lower respectively also alternating over these parts.

5.  Cell (1) according to one of the preceding claims, **characterized in that** said upper (31) and lower (32) collector parts define for said n unit cells (10) a total number of said collectors (33, 34, 35, 36) equal to n+1.

6.  Cell (1) according to one of the preceding claims, **characterized in that** said upper (11) and lower (12) electrodes are each formed on a carbon monolith, and/or **in that** said electrolyte is of the aqueous type.

7.  Cell (1) according to Claim 6, **characterized in that** said collectors (33, 34, 35, 36) each comprise a metal conductor (39a) which is coated with a polymer layer (39b, 39c) for protection against said electrolyte, on its external face in contact with said packaging (20) and on its internal face turned toward the opposing lower and upper collectors, respectively.

8.  Cell (1) according to one of the preceding claims, **characterized in that** said packaging (20) comprises a single deformable film folded back on itself or else two deformable films (21 and 22) of a multilayer plastic material, metallized or not, two faces respectively upper and lower of this single film or else these two films being sealed preferably by heat sealing between said unit cells (10) adjacent in pairs and on end edges (24 and 25) of the cell so as to define dead volumes within these unit cells, this packaging preferably having a thickness in the range between 50 μm and 200 μm.

9.  Supercapacitive module (50) capable of forming a supercapacitor, the module comprising:

    - a rigid housing (51) preferably in the form of a parallelepiped and composed of two parts soldered or bonded onto one another,
    - at least one stack (52) of m (m ≥ 2) cells (1) disposed on a bottom wall (51a) of the housing, each cell comprising n unit cells (10) (n ≥ 2) arranged side by side in series and encapsulated in a flexible and leak-tight packaging (20) and

- means for maintaining under pressure (53) said at least one stack which push up against a top wall (51 b) of the housing and against one said cell (1) nearest to said at least one stack,

**characterized in that** each of said cells is such as defined in one of the preceding claims.

10. Module (50) according to Claim 9, **characterized in that** it comprises one said stack (52) of $m \geq 5$ cells (1), each of the cells comprising $n \geq 5$ unit cells (10).

11. Module (50) according to Claim 9 or 10, **characterized in that** said means for maintaining under pressure (53) comprise at least one force return means (53a), such as a spring or an air cushion, which is mounted against said top wall (51 b) and against said cell (1) nearest to said at least one stack (52) and which is optionally combined with at least one plate (53b) disposed between this nearest cell and this force return means, for optimizing the distribution of forces over the respective surfaces of said electrodes (11 and 12).

12. Module (50) according to Claims 9 to 11, **characterized in that** the external face of said housing (51), preferably on said bottom wall (51a), has ribs (54) and serrations (55) for mechanical reinforcement of the module which optionally form guides and accommodations receiving strapping loops.

13. Module (50) according to Claims 9 to 12, **characterized in that** it comprises one said stack (52), all of said cells (1) of which are electrically connected together by means of two terminal collector blocks (56) which are respectively connected to two metal lugs (57) corresponding to the two terminals of the module, each lug having one lug end internal to said housing (51) assembled to said adjacent collector block by soldering (58), brazing or mechanical contact and one lug free end (57a) external to this housing designed to receive a connection element.

14. Module (50) according to Claim 13, **characterized in that** only said lugs (57) protude from said housing (51), these lugs being assembled to said collector blocks (56) at heights from said bottom wall (51a) that are identical or not, with said free ends (57a) of these lugs respectively protruding from the housing preferably in a manner adjacent to said bottom wall and in a manner adjacent to said top wall (51 b).

FIG.1

FIG.2

FIG.3

FIG.4

**EP 2 557 579 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6998190 B2